# EUROPÄISCHE PATENTANMELDUNG

(11) **EP 3 960 343 A1**
(43) Veröffentlichungstag der Anmeldung: **02.03.2022**
(21) Anmeldenummer: 21193925.1
(22) Anmeldetag: 31.08.2021
(51) Int. Cl.: B23C 1/12, B23C 9/00, B23Q 5/04, B23Q 16/10

(54) **FRÄSKOPF MIT HOHER POSITIONIERGENAUIGKEIT, FRÄSMASCHINE MIT EINEM FRÄSKOPF UND VERFAHREN ZUR POSITIONIERUNG EINES FRÄSKOPFS**

(30) Priorität: 31.08.2020 DE 102020122765; 08.09.2020 DE 102020123433
(71) Anmelder: SHW Werkzeugmaschinen GmbH, 73433 Aalen-Wasseralfingen (DE)
(72) Erfinder: Werner, Alexander, 73463 Westhausen (DE); Egetemeir, Robin, 73485 Unterschneidheim (DE)
(74) Vertreter: Misselhorn, Hein-Martin

(57) **Zusammenfassung**

Die Erfindung betrifft einen Fräskopf für eine Werkzeugmaschine (3), insbesondere Fräsmaschine, mit einem Mittenabschnitt (5) und einem Werkzeugabschnitt (4), wobei der Mittenabschnitt (5) mit dem Werkzeugabschnitt (4) über eine erste Kupplung (12) verbunden ist, wobei die erste Kupplung (12) einen ersten oberen Ring (13), einen ersten unteren Ring (14) und einen ersten Zwischenring (15) umfasst, und wobei zwischen dem ersten oberen Ring (13) und dem ersten unteren Ring (14) der erste Zwischenring (15) angeordnet ist, wobei der erste Zwischenring (15) mit einer Anzahl O1 Zähnen über eine erste obere Verzahnung (19) mit dem ersten oberen Ring (13) verzahnt ist, und wobei der erste Zwischenring (15) mit einer Anzahl U1 Zähnen über eine erste untere Verzahnung (20) mit dem ersten unteren Ring (14) verzahnt ist, und wobei sich aus der Differenz aus den Winkeln zwischen den Zähnen der ersten oberen Verzahnung (19) und der ersten unteren Verzahnung (20) eine Teilung ergibt, dadurch gekennzeichnet, dass die Anzahl O1 der Zähne der ersten oberen Verzahnung (19) 360 beträgt, dass die Anzahl U1 der Zähne der ersten unteren Verzahnung (19) zwischen 199 und 357 oder zwischen 363 und 401. liegt, und wobei die Teilung eine Zahl mit unendlich vielen Dezimalstellen ist.

## Beschreibung

Die Erfindung betrifft einen Fräskopf für eine Werkzeugmaschine, insbesondere Fräsmaschine, eine Fräsmaschine mit einem Fräskopf und ein Verfahren zur Positionierung eines Fräskopfs.

Im Stand der Technik werden zwei relativ zueinander drehbare Teile, die in verschiedenen, einstellbaren Winkelstellungen fest miteinander verbindbar sein sollen und die große Kräfte und/oder Momente wie beispielsweise beim Fräsen übertragen sollen, meist über eine Kupplung in Form einer sogenannten Hirthverzahnung miteinander verbunden. Die Kupplung in Form einer Hirthverzahnung zeichnet sich dadurch aus, dass ein oberer Ring und ein unterer Ring vorgesehen sind. Zwischen oberem und unterem Ring ist ein Zwischenring angeordnet, wobei der erste Zwischenring mit einer Anzahl O1 Zähnen über eine erste obere Verzahnung mit dem ersten oberen Ring verzahnt ist, und wobei der erste Zwischenring mit einer Anzahl U1 Zähnen über eine erste untere Verzahnung mit dem ersten unteren Ring verzahnt ist, und wobei sich aus der Differenz aus den Winkeln zwischen den Zähnen der oberen Verzahnung und der unteren Verzahnung, also 360°/O1 - 360°/U1, eine Teilung ergibt.

Nach dem Stand der Technik wird die Teilung so eingestellt wie es die kleinste Auflösung der beabsichtigten Relativverstellung der beiden relativ zueinander drehbaren Teile erfordert. Sollen beispielsweise die beiden Teile in 0,5°-Schritten gegeneinander verstellbar sein, so kann beispielsweise für die erste Verzahnung eine Anzahl an Zähnen O1 von 120 und für die untere Verzahnung eine Anzahl an Zähnen von U1 von 144 gewählt werden, womit eine Teilung von 0,5° entsteht. Die aus dem Stand der Technik bekannte kleinste Teilung, die technisch ohne großen Aufwand herstellbar ist, ist eine Teilung von 0,1°. Diese Teilung entsteht, wenn für die erste Verzahnung eine Anzahl an Zähnen O1 von 144 und für die untere Verzahnung eine Anzahl an Zähnen von U1 von 150 eingesetzt wird.

Soll eine noch kleinere Winkelverstellung als 0,1° erreichbar sein, so schlägt der Stand der Technik vor, die Anzahl der Zähne an mindestens einem Zahnrad sehr deutlich zu erhöhen, pro Nachkommastelle um mindestens eine Größenordnung mehr. Ein Winkel von 0,01° würde dann nach obiger Formel bedeuten, dass das eine Zahnrad 1440 und das andere Zahnrad 1200 Zähne aufweisen müssen. So viele Zähne sind technisch nur sehr schwierig und sehr zeitaufwändig herzustellen. Meist müssen die Zähne aufgrund der hohen Anzahl dann auch sehr klein sein. Kleine Zähne sind aber wiederum nachteilig, um hohe Drehmomente und/oder Kräfte übertragen zu können. Alternativ kann der Radius des oberen Rings, des unteren Rings und des Zwischenring jeweils extrem groß gewählt sein, um große Zähne fertigen zu können und um damit große Drehmomente und/oder Kräfte übertragen zu können. Es kann dabei erforderlich sein, dass der Radius aber so groß ist, dass die Welle zu groß für die Fräsmaschine ist und/oder die Welle ein großes Gewicht aufweist und aufwändig herstellbar ist.

Es ist daher Aufgabe der Erfindung, einen Fräskopf für eine Werkzeugmaschine anzugeben, welcher eine hohe Positioniergenauigkeit aufweist und welcher einfach herstellbar ist.

Es ist daher Aufgabe der Erfindung, eine Fräsmaschine mit einem Fräskopf für eine Werkzeugmaschine anzugeben, welcher eine hohe Positioniergenauigkeit aufweist und welcher einfach herstellbar ist.

Es ist weiter Aufgabe der Erfindung, ein Verfahren zur Positionierung eines Fräskopfs für eine Werkzeugmaschine anzugeben, mit welchem eine hohe Positioniergenauigkeit ermöglicht wird.

Die Aufgabe wird mit einem Fräskopf nach Anspruch 1 und/oder mit einem Fräskopf nach Anspruch 5 und/oder mit einer Fräsmaschine nach Anspruch 12 gelöst.

Bezüglich des Verfahrens wird die Aufgabe mit einem Verfahren nach Anspruch 13 gelöst.

Erfindungsgemäß umfasst der Fräskopf für eine Werkzeugmaschine, insbesondere für eine Fräsmaschine, einen Mittenabschnitt und einem Werkzeugabschnitt, wobei der Mittenabschnitt mit dem Werkzeugabschnitt über eine erste Kupplung verbunden ist. Der Werkzeugabschnitt ist relativ zum Mittenabschnitt drehbar bzw. schwenkbar. Die erste Kupplung weist einen ersten oberen Ring, einen ersten unteren Ring und einen ersten Zwischenring auf, wobei der erste obere Ring mit dem Werkzeugabschnitt oder mit dem Mittenabschnitt, bevorzugt mit dem Werkzeugabschnitt, insbesondere drehfest verbunden ist, wobei der erste untere Ring mit dem Mittenabschnitt oder mit dem Werkzeugabschnitt, bevorzugt mit dem Mittenabschnitt, insbesondere drehfest verbunden ist. Zwischen dem ersten oberen Ring und dem ersten unteren Ring ist der erste Zwischenring angeordnet, wobei der erste Zwischenring mit einer Anzahl O1 Zähnen über eine erste obere Verzahnung mit dem ersten oberen Ring verzahnt ist, und wobei der erste Zwischenring mit einer Anzahl U1 Zähnen über eine erste untere Verzahnung mit dem ersten unteren Ring verzahnt ist. Aus der Differenz aus den Winkeln zwischen den Zähnen der oberen Verzahnung und der unteren Verzahnung, also 360°/O1 - 360°/U1, ergibt sich eine Teilung, insbesondere eine erste Teilung. Die Anzahl O1 der Zähne einer der ersten oberen oder ersten unteren, vorteilhaft der anderen ersten oberen, Verzahnung beträgt zweckmäßig 360. Die Anzahl U1 der Zähne der anderen der ersten oberen oder ersten unteren, vorteilhaft der ersten unteren, Verzahnung liegt zweckmäßig zwischen 199 und 357 oder zwischen 363 und 401. Die Teilung, insbesondere die erste Teilung oder die zweite Teilung, ist eine Zahl mit unendlich vielen Dezimalstellen.

Durch die Teilung, insbesondere die erste Teilung oder die zweite Teilung, mit einer Zahl mit unendlich vielen Dezimalstellen ergibt sich bei Verstellung des Mittenabschnitts relativ zum Werkzeugabschnitt im Allgemeinen ein Einzelfehler. Mit Mittenabschnitt relativ zum Werkzeugabschnitt ist gemeint, dass die beiden Abschnitte relativ zueinander verstellt werden. Hierunter ist demnach auch zu verstehen, dass der Werkzeugabschnitt relativ zum Mittenabschnitt verstellbar ist. Dieser Einzelfehler wird im Fräskopf der vorliegenden Erfindung bewusst ausgenutzt. Bei Addition einer Anzahl an Einzelfehlern kann es zu einem Gesamtfehler kommen, der wiederum minimal klein sein kann oder sogar null sein kann. Der Gesamtfehler ist zweckmäßig so klein, dass der Gesamtfehler in der Toleranz des Fräskopfs, insbesondere in der Maschinentoleranz liegt. Damit kann erreicht werden, dass die beiden Abschnitte (Werkzeugabschnitt, Mittenabschnitt) in hoher Genauigkeit gegeneinander verstellt werden können, so dass damit eine hohe Positioniergenauigkeit ermöglicht ist. Durch die moderate Anzahl an Zähnen pro Zahnrad ist überdies der Fräskopf einfach herstellbar.

Vorteilhaft beträgt die Anzahl U1 der Zähne der anderen ersten oberen oder ersten unteren, vorteilhaft der ersten unteren, Verzahnung 353. Bei dieser Kombination kann eine Positionierung von etwa 0,01° erreicht werden, wobei der Gesamtfehler zwischen 0,0000° und etwa 0,0014° liegt, wobei insbesondere 0,0014° der gerundete maximale Fehler ist. Der gerundete maximale Fehler entspricht demnach der gerundeten Obergrenze des Gesamtfehlers, insbesondere gerundet auf fünf Nachkommastellen.

In tabellarischer Form sollen nachfolgend weitere vorteilhafte Kombinationen von Zähnen der ersten oberen mit der ersten unteren Verzahnung angegeben werden:

| O1 oder U1 | U1 oder O1 | gerundeter maximaler Fehler |
|---|---|---|
| 360 | 337 | 0,00148368 |
| 360 | 341 | 0,00146628 |
| 360 | 343 | 0,00145773 |
| 360 | 347 | 0,00144092 |
| 360 | 349 | 0,00143266 |
| 360 | 353 | 0,00141643 |
| 360 | 359 | 0,00139276 |
| 360 | 361 | 0,00138504 |
| 360 | 367 | 0,00136240 |
| 360 | 371 | 0,00134771 |
| 360 | 373 | 0,00134048 |
| 360 | 377 | 0,00132626 |
| 360 | 379 | 0,00131926 |
| 360 | 383 | 0,00130548 |
| 360 | 389 | 0,00128535 |
| 360 | 391 | 0,00127877 |
| 360 | 397 | 0,00125945 |

Vorzugsweise ist die Teilung, insbesondere die erste Teilung oder die zweite Teilung, kleiner 0,02°. Zweckmäßig liegt eine maximale Abweichung zwischen Sollposition und Istposition bei etwa 0,0015°, insbesondere ist die maximale Abweichung kleiner als etwa 0,0015°. In obiger Tabelle ist die maximale Abweichung als gerundeter maximaler Fehler angegeben. Dieser Fehler ist dann so klein, dass der Fehler im Allgemeinen im Bereich der Maschinentoleranz liegt.

Vorteilhaft umfasst der Fräskopf einen Anbindungsabschnitt, wobei der Anbindungsabschnitt mit dem Mittenabschnitt über eine zweite Kupplung verbunden ist. Besonders vorteilhaft umfasst die Fräsmaschine einen Anbindungsabschnitt, wobei der Anbindungsabschnitt der Fräsmaschine mit dem Mittenabschnitt des Fräskopfs über eine zweite Kupplung verbindbar ist. Es kann zweckmäßig sein, dass der Mittenabschnitt eine Hülse umfasst, und insbesondere dass die Hülse drehfest mit dem Mittenabschnitt verbunden ist. Die Hülse ermöglicht ein Drehen in Form eines Drehlagers des Mittenabschnitts relativ zum Anbindungsabschnitt und damit des Fräskopfs relativ zur Fräsmaschine. Der Mittenabschnitt ist relativ zum Anbindungsabschnitt drehbar bzw. schwenkbar Vorzugsweise umfasst die zweite Kupplung einen zweiten oberen Ring, einen zweiten unteren Ring und einen zweiten Zwischenring, wobei der zweite obere Ring mit dem Anbindungsabschnitt insbesondere drehfest verbunden ist, wobei der zweite untere Ring mit dem Mittenabschnitt insbesondere drehfest verbunden ist. Vorteilhaft ist zwischen dem zweiten oberen Ring und dem zweiten unteren Ring der zweite Zwischenring angeordnet. Vorzugsweise ist der zweite Zwischenring mit einer Anzahl O2 Zähnen über eine zweite obere Verzahnung mit dem zweiten oberen Ring verzahnt. Zweckmäßig ist der zweite Zwischenring mit einer Anzahl U2 Zähnen über eine zweite untere Verzahnung mit dem zweiten unteren Ring verzahnt. Vorteilhaft ergibt sich aus der Differenz aus den Winkeln zwischen den Zähnen der oberen Verzahnung und der unteren Verzahnung, also 360°/O2 - 360°/U2, eine zweite Teilung. Vorzugsweise beträgt die Anzahl O2 der Zähne der zweiten oberen oder zweiten unteren, vorteilhaft der zweiten oberen Verzahnung 360. Zweckmäßig liegt die Anzahl U2 der Zähne der anderen zweiten oberen oder zweiten unteren, vorteilhaft der zweiten unteren Verzahnung zwischen 199 und 357 oder zwischen 363 und 401. Vorteilhaft ist die zweite Teilung eine Zahl mit unendlich vielen Dezimalstellen. Zweckmäßig sind die erste Teilung und die zweite Teilung identisch.

Vorteilhaft entspricht die Anzahl U2 der Zähne der anderen zweiten oberen oder zweiten unteren, vorteilhaft der zweiten unteren Verzahnung der Anzahl U1 der Zähne der ersten unteren Verzahnung. Damit können in der ersten und zweiten Kupplung gleiche Winkeleinstellungen gefahren werden.

Zweckmäßig ist der Fräskopf ein 45°-Fräskopf. Zweckmäßig stehen die Dreh- bzw. Schwenkachse des Werkzeugabschnitts und die Dreh- bzw. Schwenkachse des Mittenabschnitts in einem Winkel von 45° zueinander.

Erfindungsgemäß umfasst der Fräskopf für eine Werkzeugmaschine, insbesondere für eine Fräsmaschine, einen Mittenabschnitt und einen Werkzeugabschnitt. Vorteilhaft ist der Mittenabschnitt mit dem Werkzeugabschnitt über eine erste Kupplung verbunden, wobei die erste Kupplung einen ersten oberen Ring, einen ersten unteren Ring und einen ersten Zwischenring umfasst, wobei der erste obere Ring mit dem Werkzeugabschnitt oder mit dem Mittenabschnitt, bevorzugt mit dem Werkzeugabschnitt, insbesondere drehfest verbunden ist, wobei der erste untere Ring mit dem Mittenabschnitt oder mit dem Werkzeugabschnitt, bevorzugt mit dem Mittenabschnitt, insbesondere drehfest verbunden ist. Zweckmäßig ist zwischen dem ersten oberen Ring und dem ersten unteren Ring der erste Zwischenring angeordnet. Vorteilhaft ist der erste Zwischenring mit einer Anzahl O1 Zähnen über eine erste obere Verzahnung mit dem ersten oberen Ring verzahnt. Vorteilhaft ist der erste Zwischenring mit einer Anzahl U1 Zähnen über eine erste untere Verzahnung mit dem ersten unteren Ring verzahnt ist. Aus der Differenz aus den Winkeln zwischen den Zähnen der ersten oberen Verzahnung und der ersten unteren Verzahnung, also 360°/O1 - 360°/U1, ergibt sich eine Teilung, insbesondere einer erste Teilung, wobei die Teilung, insbesondere die erste oder die zweite Teilung, zweckmäßig eine Zahl mit unendlich vielen Dezimalstellen ist. Vorteilhaft ist entweder die dritte Dezimalstelle und/oder die vierte Dezimalstelle der Teilung, insbesondere die erste Teilung oder die zweite Teilung, ungleich 0. Zweckmäßig wird hierbei die Teilung auf vier Nachkommastellen gerundet, wobei insbesondere die fünfte Nachkommastelle zum Runden herangezogen wird. Ist beispielsweise die fünfte Nachkommastelle eine Zahl zwischen 5 und 9, so wird die vierte Nachkommastelle insbesondere aufgerundet. Ist beispielsweise die fünfte Nachkommastelle eine Zahl zwischen 0 und 4, so wird die vierte Nachkommastelle beibehalten.

Durch die Teilung, insbesondere die erste Teilung oder die zweite Teilung, mit einer Zahl mit unendlich vielen Dezimalstellen ergibt sich bei Verstellung des Mittenabschnitts relativ zum Werkzeugabschnitt im Allgemeinen ein Einzelfehler. Dieser Einzelfehler wird im Fräskopf der vorliegenden Erfindung bewusst ausgenutzt. Bei Addition einer Anzahl an Einzelfehlern kann es zu einem Gesamtfehler kommen, der wiederum minimal klein sein kann oder sogar null sein kann. Der Gesamtfehler ist zweckmäßig so klein, dass der Gesamtfehler in der Toleranz des Fräskopfs, insbesondere in der Maschinentoleranz liegt. Damit kann erreicht werden, dass die beiden Abschnitte (Mittenabschnitt, Werkzeugabschnitt) in hoher Genauigkeit gegeneinander verstellt werden können, so dass damit eine hohe Positioniergenauigkeit ermöglicht ist. Durch die Unterbindung, dass sowohl dritte und vierte Dezimalstelle gleichzeitig null sein können, wird ein Einzelfehler erzielt, der einen sehr kleinen Gesamtfehler ergibt, und wobei der Einzelfehler wiederum nicht so klein ist, dass nicht alle gewünschten Winkel im gesamten Spektrum von 0,00° bis 360,00°, insbesondere mit einer Genauigkeit von etwa 0,01°, eingestellt werden können.

Vorteilhaft ist die dritte Dezimalstelle der Teilung, insbesondere die erste Teilung und/oder die zweite Teilung, 7, 8, 9, 0, 1, 2 oder 3, besonders vorteilhaft ist die dritte Dezimalstelle der Teilung, insbesondere die erste Teilung und/oder die zweite Teilung, 8, 9, 0, 1 oder 2, ganz besonders vorteilhaft ist die dritte Dezimalstelle der Teilung, insbesondere die erste Teilung und/oder die zweite Teilung, 9, 0 oder 1. Vorzugsweise ist die vierte Dezimalstelle der Teilung, insbesondere die erste Teilung und/oder die zweite Teilung, 7, 8, 9, 0, 1, 2 oder 3, besonders vorteilhaft ist die vierte Dezimalstelle der Teilung, insbesondere die erste Teilung und/oder die zweite Teilung, 8, 9, 0, 1 oder 2, ganz besonders vorteilhaft ist die vierte Dezimalstelle der Teilung, insbesondere die erste Teilung und/oder die zweite Teilung, 9, 0 oder 1. Damit kann der Gesamtfehler sehr klein ausgewählt werden und gleichzeitig kann das gewünschte Winkelspektrum ausgereizt werden.

Vorteilhaft ist eine kleinste mögliche Positionierung von Mittenabschnitt relativ zum Werkzeugabschnitt von höchstens etwa 0,04°, insbesondere höchstens etwa 0,03°, insbesondere höchstens etwa 0,02°, insbesondere höchstens etwa 0,01°, einstellbar. Vorteilhaft ist eine kleinste mögliche Positionierung von Mittenabschnitt relativ zum Anbindungsabschnitt von höchstens etwa 0,04°, insbesondere höchstens etwa 0,03°, insbesondere höchstens etwa 0,02°, insbesondere höchstens etwa 0,01°, einstellbar. Vorteilhaft ist der Gesamtfehler zwischen 0,0000° und etwa 0,0014° liegt, wobei insbesondere 0,0014° der gerundete maximale Fehler ist. Mit anderen Worten ist der Mittenabschnitt relativ zum Werkzeugabschnitt um etwa 0,04°, insbesondere etwa 0,03°, insbesondere etwa 0,02°, insbesondere etwa 0,01° positionierbar, insbesondere drehbar. Mit anderen Worten ist der Mittenabschnitt relativ zum Anbindungsabschnitt um etwa 0,04°, insbesondere etwa 0,03°, insbesondere etwa 0,02°, insbesondere etwa 0,01° positionierbar, insbesondere drehbar.

Vorteilhaft ist eine Abweichung von einer Istposition des Mittenabschnitts relativ zum Werkzeugabschnitt zu einer Sollposition des Mittenabschnitts relativ zum Werkzeugabschnitt kleiner als etwa 0,004°, insbesondere kleiner als etwa 0,0025°, insbesondere kleiner als etwa 0,002° und insbesondere kleiner als etwa 0,0015°. Vorteilhaft ist eine Abweichung von einer Istposition des Mittenabschnitts relativ zum Anbindungsabschnitt zu einer Sollposition des Mittenabschnitts relativ zum Anbindungsabschnitt kleiner als etwa 0,004°, insbesondere kleiner als etwa 0,0025°, insbesondere kleiner als etwa 0,002° und insbesondere kleiner als etwa 0,0015°.

Unabhängig von den Ansprüchen wird auch Schutz begehrt für einen Fräskopf für eine Werkzeugmaschine, insbesondere Fräsmaschine, mit einem Mittenabschnitt, wobei der Mittenabschnitt mit einem Anbindungsabschnitt über eine, insbesondere zweite, Kupplung verbindbar ist, wobei die, insbesondere zweite, Kupplung einen, insbesondere zweiten, oberen Ring, einen, insbesondere zweiten, unteren Ring und einen, insbesondere zweiten, Zwischenring umfasst, wobei der, insbesondere zweite, obere Ring mit dem Mittenabschnitt drehfest verbunden ist, wobei der, insbesondere zweite, untere Ring mit dem Anbindungsabschnitt drehfest verbunden ist, und wobei zwischen dem, insbesondere zweiten, oberen Ring und dem, insbesondere zweiten, unteren Ring der, insbesondere zweite, Zwischenring angeordnet ist, wobei der, insbesondere zweite, Zwischenring mit einer Anzahl O2 Zähnen über eine, insbesondere zweite, obere Verzahnung mit dem, insbesondere zweiten, oberen Ring verzahnt ist, und wobei der, insbesondere zweite, Zwischenring mit einer Anzahl U2 Zähnen über eine, insbesondere zweite, untere Verzahnung mit dem, insbesondere zweiten, unteren Ring verzahnt ist, und wobei sich aus der Differenz aus den Winkeln zwischen den Zähnen der, insbesondere zweiten, oberen Verzahnung und der, insbesondere zweiten, unteren Verzahnung, also 360°/O2 - 360°/U2, eine, insbesondere zweite, Teilung ergibt, dadurch gekennzeichnet, dass die, insbesondere zweite, Teilung eine Zahl mit unendlich vielen Dezimalstellen ist, und wobei die dritte Dezimalstelle und/oder die vierte Dezimalstelle der, insbesondere zweiten, Teilung ungleich 0 ist.

Erfindungsgemäß umfasst die Fräsmaschine einen Fräskopf nach einem der Ansprüche 1 bis 11.

Zweckmäßig umfasst die Fräsmaschine den Anbindungsabschnitt. Es kann aber auch vorteilhaft sein, wenn der Fräskopf den Anbindungsabschnitt umfasst.

Erfindungsgemäß umfasst das Verfahren zur Positionierung eines Fräskopfs nach einem der Ansprüche 1 bis 11 mindestens einen, insbesondere mehrere Verfahrensschritte. Zweckmäßig vergleicht eine Steuereinheit eine erste Istposition des Mittenabschnitts relativ zum Werkzeugabschnitt mit einer ersten Sollposition des Mittenabschnitts zum Werkzeugabschnitt. Vorteilhaft berechnet die Steuereinheit unter Berücksichtigung der Teilung mindestens zwei, bevorzugt sämtliche, mögliche Realpositionen berechnet, wie der Mittenabschnitt relativ zum Werkzeugabschnitt (bzw. umgekehrt) in eine erste Realposition ausrichtbar ist. Unter Berechnung kann eine tatsächliche Berechnung verstanden werden. Unter Berechnung kann aber auch eine Interpolation aus Werten, die beispielsweise in einer Look-Up Tabelle, also in einer Datenbank, gespeichert sind, verstanden werden. Unter Berechnung kann auch ein direktes Auswerten aus Werten aus einer Datenbank verstanden werden. Vorteilhaft wählt die Steuereinheit unter den berechneten möglichen Realpositionen die erste Realposition aus, bei der die geringste Abweichung zwischen erster Sollposition und erster Realposition besteht. Zweckmäßig wird die erste Realposition des Mittenabschnitts relativ zum Werkzeugabschnitt eingestellt.

Damit kann sichergestellt werden, dass der Mittenabschnitt relativ zum Werkzeugabschnitt mit einem kleinen, zweckmäßig mit dem kleinstmöglichen Fehler ausgerichtet wird.

Vorteilhaft werden zur Einstellung der ersten Realposition des Werkzeugabschnitts relativ zum Mittenabschnitt der erste obere Ring und der erste Zwischenring verstellt. Vorteilhaft werden der erste obere Ring und der erste Zwischenring in entgegengesetzter Drehrichtung verstellt. Zur Auffindung des kleinsten Fehlers kann es erforderlich sein, dass eine der Ringe deutlich weiter gedreht werden muss, als es die gewünschte Position erfordert, so dass mit dem ersten oberen Ring wieder zurückgedreht wird, wodurch die gewünschte Position mit möglichst kleinem Fehler eingestellt wird. Durch das entgegengesetzte Drehen wird im Allgemeinen Zeit gespart.

Vorzugsweise wird zur Einstellung der ersten Realposition der erste Zwischenring soweit gedreht, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht. Vorzugsweise wird zur Einstellung der ersten Realposition der erste obere Ring soweit gedreht, dass bezüglich der Vorkommastellen der Abweichung zwischen erster Sollposition und erster Realposition die geringste Abweichung zwischen erster Sollposition und erster Realposition besteht.

Zweckmäßig wird zur Einstellung der ersten Realposition der erste obere Ring soweit gedreht, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht. Zweckmäßig wird zur Einstellung der ersten Realposition der erste Zwischenring soweit gedreht, dass bezüglich der Vorkommastellen der Abweichung zwischen erster Sollposition und erster Realposition die geringste Abweichung zwischen erster Sollposition und erster Realposition besteht.

Damit wird mit dem einen Ring im Wesentlichen die gewünschte Dezimalstelle eingestellt, mit dem anderen Ring wird im Wesentlichen die gewünschte Vorkommastelle eingestellt. Das funktioniert beispielsweise ganz besonders gut, wenn einer der Ringe 360 Zähne aufweist.

Erfindungsgemäß umfasst das Verfahren zur Positionierung eines Fräskopfs nach einem der Ansprüche 13 bis 16 und nach Anspruch 4, oder nach einem der Ansprüche 13 bis 16 und Anspruch 9 oder 10 mindestens einen, insbesondere mehrere Verfahrensschritte. Zweckmäßig vergleicht eine Steuereinheit eine zweite Istposition des Anbindungsabschnitts relativ zum Mittenabschnitt (bzw. umgekehrt) mit einer zweiten Sollposition des Anbindungsabschnitts zum Mittenabschnitt. Zweckmäßig ist die Steuereinheit, die die erste Istposition mit der ersten Sollposition vergleicht die gleiche Steuereinheit, wie die Steuereinheit, die die zweite Istposition mit der zweiten Sollposition vergleicht. Vorteilhaft berechnet die Steuereinheit unter Berücksichtigung der zweiten Teilung mindestens zwei, bevorzugt sämtliche, mögliche Realpositionen, wie der Anbindungsabschnitt relativ zum Mittenabschnitt in eine zweite Realposition ausrichtbar ist. Vorteilhaft wählt die Steuereinheit unter den berechneten möglichen Realpositionen die zweite Realposition aus, bei der die geringste Abweichung zwischen zweiter Sollposition und zweiter Realposition besteht. Zweckmäßig wird die zweite Realposition des Anbindungsabschnitts relativ zum Mittenabschnitt eingestellt.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Vorteilhafte Ausführungsbeispiele der Erfindung werden nachfolgende anhand der beiliegenden Figuren beschrieben. Es zeigen
Fig. 1 eine perspektivische Ansicht eines Fräskopfs,
Fig. 2 eine weitere perspektivische Ansicht des Fräskopfs,
Fig. 3 eine perspektivische Ansicht des Fräskopfs mit Teilen einer Fräsmaschine,
Fig. 4 eine Seitenansicht des Fräskopfs in einer ersten Stellung,
Fig. 5 eine Vorderansicht des Fräskopfs,
Fig. 6 eine Seitenansicht des Fräskopfs in einer zweiten Stellung,
Fig. 7 eine Schnittansicht des Fräskopfs,
Fig. 8 eine Schnittansicht des Fräskopfs mit Teilen der Fräsmaschine,
Fig. 9 eine im Vergleich zu Fig. 7 vergrößerte Schnittansicht des Fräskopfs,
Fig. 10 eine Schnittansicht des in Fig. 9 dargestellten Bereichs "Z" in einem geklemmten Zustand,
Fig. 11 eine Schnittansicht des in Fig. 9 dargestellten Bereichs "Z" in einem gelösten Zustand,
Fig. 12 eine Schnittansicht des in Fig. 9 dargestellten Bereichs "Y" in einem geklemmten Zustand, und
Fig. 13 eine Schnittansicht des in Fig. 9 dargestellten Bereichs "Y" in einem gelösten Zustand.

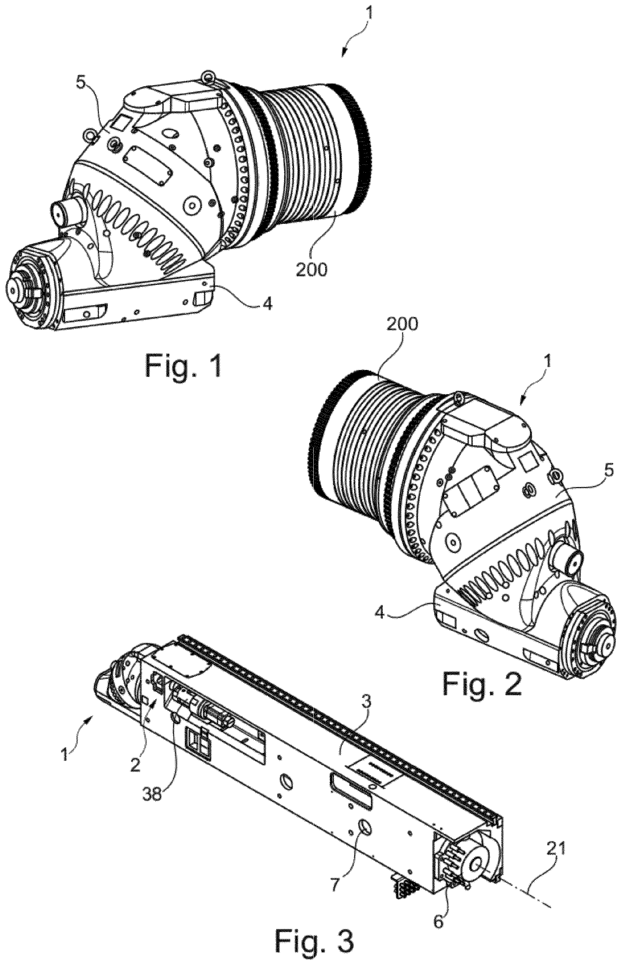

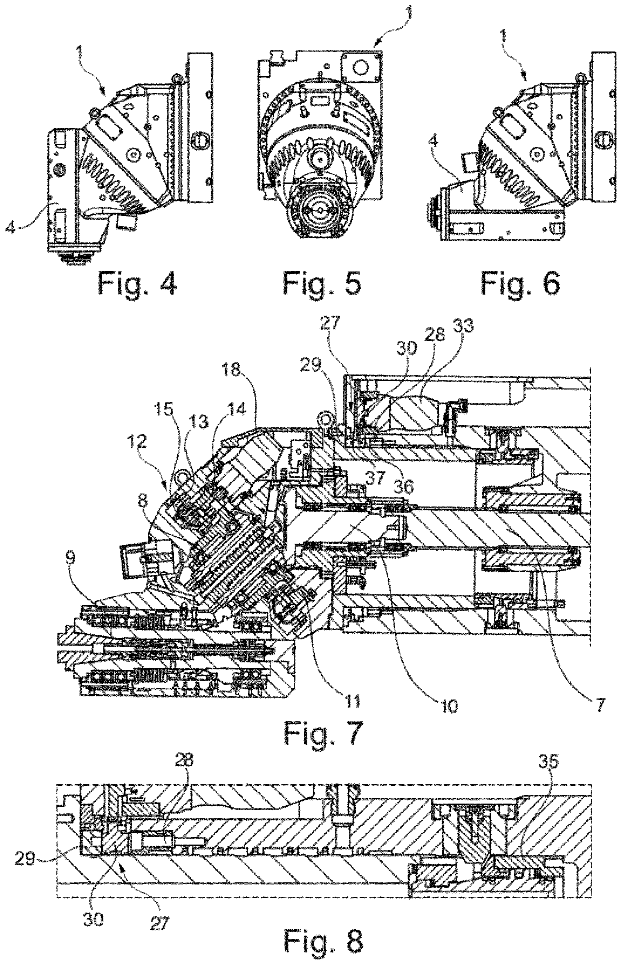

In einem Ausführungsbeispiel zeigen die Fig. 1 und 2 einen Fräskopf 1. Bei dem Fräskopf 1 handelt es sich im Ausführungsbeispiel um einen Universalfräskopf 45°. Der Fräskopf 1 ist über einen in Fig. 3 und 7 gezeigten Anbindungsabschnitt 2 an eine in Fig. 3 gezeigte Werkzeugmaschine 3 in Form einer Fräsmaschine anbindbar. Im Ausführungsbeispiel umfasst die Werkzeugmaschine 3 den Anbindungsabschnitt 2. Es kann in einem weiteren Ausführungsbeispiel zweckmäßig sein, wenn der Fräskopf 1 den Anbindungsabschnitt 2 umfasst. Im Ausführungsbeispiel umfasst die Werkzeugmaschine 3 den Anbindungsabschnitt 2, wobei am Fräskopf 1 eine Hülse 200 vorgesehen ist. Die Hülse 200 ist mit dem Anbindungsabschnitt 2 verbindbar. Die Hülse 200 ermöglicht eine drehbare Lagerung des Fräskopfs 1 relativ zur Werkzeugmaschine 3. Fig. 3 zeigt nur einen kleinen Teil bzw. nur einen kleinen Ausschnitt der Werkzeugmaschine 3.

Der Fräskopf 1 umfasst einen Werkzeugabschnitt 4. An den Werkzeugabschnitt 4 kann ein in den Figuren nicht gezeigtes Werkzeug, beispielsweise ein Fräser oder dergleichen, angebunden sein. Gegebenenfalls kann zur Anbindung des Werkzeugs an den Werkzeugabschnitt 4 des Fräskopfs 1 eine Werkzeugaufnahme erforderlich sein. Der Fräskopf 1 umfasst einen Mittenabschnitt 5. Der Mittenabschnitt 5 umfasst die Hülse 200, die insbesondere fest mit dem Mittenabschnitt 5 verbunden ist. Der Mittenabschnitt 5 verbindet den Anbindungsabschnitt 2 mit dem Werkzeugabschnitt 4. Der Mittenabschnitt 5 ist relativ zum Anbindungsabschnitt 2 dreh- bzw. schwenkbar. Der Werkzeugabschnitt 4 ist relativ zum Mittenabschnitt 5 dreh- bzw. schwenkbar. Durch die Dreh- bzw. Schwenkbarkeit sind unterschiedliche Positionen des Werkzeugs in der Fräsmaschine 3 realisierbar, so dass komplexe dreidimensionale Geometrien bzw. Werkstücke fräsbar sind. Der Mechanismus der Drehbarkeit wird weiter unten näher erläutert.

Zum Antrieb des Werkzeugs ist eine Kraftübertragung von der Fräsmaschine 3 über den Fräskopf 1 zum Werkzeug erforderlich. Fig. 3 zeigt einen in der Fräsmaschine 3 angeordneten Hauptantrieb 6. Der Hauptantrieb 6 überträgt über eine Hauptantriebswelle 7 die Antriebskraft bzw. das Antriebsmoment zum Fräskopf 1. Innerhalb des Fräskopfs 1 wird die Antriebskraft bzw. das Antriebsmoment über eine in Fig. 7 gezeigte dritte Welle 10, vierte Welle 11, erste Welle 8 und zweite Welle 9 zum Werkzeug geleitet. Die dritte Welle 8 ist im Betriebszustand mit der Hauptantriebswelle 7 verbunden. Mit dem Ausgang der zweiten Welle 9 ist das Werkzeug wirkverbunden. Im Ausführungsbeispiel ist die erste Welle 8 und die vierte Welle 11 identisch. Zweckmäßig ist die erste Welle 8 mit der zweiten Welle 9 verbunden. Insbesondere kann es vorteilhaft sein, dass zwischen erster und zweiter Welle ein Getriebe, insbesondere Zahnradgetriebe, insbesondere Winkelgetriebe angeordnet ist. Es kann zweckmäßig sein, dass das Getriebe ein Untersetzungsgetriebe ist, oder dass das Getriebe ein Untersetzungsgetriebe und ein Winkelgetriebe ist. Es kann zweckmäßig sein, dass das Getriebe ein Winkelgetriebe mit Übersetzung 1:1 ist. Zweckmäßig ist die dritte Welle 10 mit der vierten Welle 11 verbunden. Insbesondere kann es vorteilhaft sein, dass zwischen dritter und vierter Welle ein Getriebe, insbesondere Zahnradgetriebe, insbesondere Winkelgetriebe angeordnet ist. Es kann zweckmäßig sein, dass das Getriebe ein Untersetzungsgetriebe ist, oder dass das Getriebe ein Untersetzungsgetriebe und ein Winkelgetriebe ist.

Die Fig. 4, 5 und 6 zeigen den Fräskopf 1 und dessen wesentliche Abmessungen, die somit Bestandteil der Beschreibung sind. Vorteilhaft können die Oberflächen der DIN ISO 1302 Reihe 2, die Allgemeintoleranzen der DIN ISO 2768 m k, die Formtoleranzen der DIN ISO 1101, die Lagetoleranzen der DIN ISO 1101, die Werkstückkanten der DIN ISO 13715 und der Urheberrechtsschutz der DIN ISO 16016 entsprechen. Es kann zweckmäßig sein, dass nur eine der vorgenannten Angaben zutrifft. Es kann auch zweckmäßig sein, dass eine Kombination der vorgenannten Angaben zutrifft. Fig. 4 und 6 unterscheiden sich im Wesentlichen dadurch, dass der Werkzeugabschnitt 4 um 180° gedreht ist.

Anhand der Fig. 7 bis 11 soll im Nachfolgenden der Kraftübertragungsmechanismus vom Hauptantrieb 6 (Fig. 3) auf das Werkzeug sowie der Mechanismus der Drehbarkeit erläutert werden.

Der Fräskopf 1 umfasst den Mittenabschnitt 5 und den Werkzeugabschnitt 4. Der Mittenabschnitt 5 ist im Betriebszustand drehfest verbunden mit dem Werkzeugabschnitt 4. Mit Betriebszustand ist gemeint, dass bei Anschluss des Fräskopfs 1 an die Fräsmaschine 3 und bei Anschluss eines Werkzeugs an den Fräskopf 1 ein Werkstück fräsbar ist.

Der Mittenabschnitt 5 ist mit dem Werkzeugabschnitt 6 verbunden. Die erste Kupplung 12 umfasst einen ersten oberen Ring 13, einen ersten unteren Ring 14 und einen ersten Zwischenring 15. Der erste obere Ring 13 ist mit dem Werkzeugabschnitt 6 drehfest verbunden. Der erste untere Ring 14 ist mit dem Mittenabschnitt 5 drehfest verbunden. Es versteht sich von selbst, dass in einem weiteren Ausführungsbeispiel der erste obere Ring 13 mit dem Mittenabschnitt 5 drehfest verbunden und der erste untere Ring 14 mit dem Werkzeugabschnitt 6 drehfest verbunden sein kann. Zwischen dem ersten oberen Ring 13 und dem ersten unteren Ring 14 ist der erste Zwischenring 15 angeordnet.

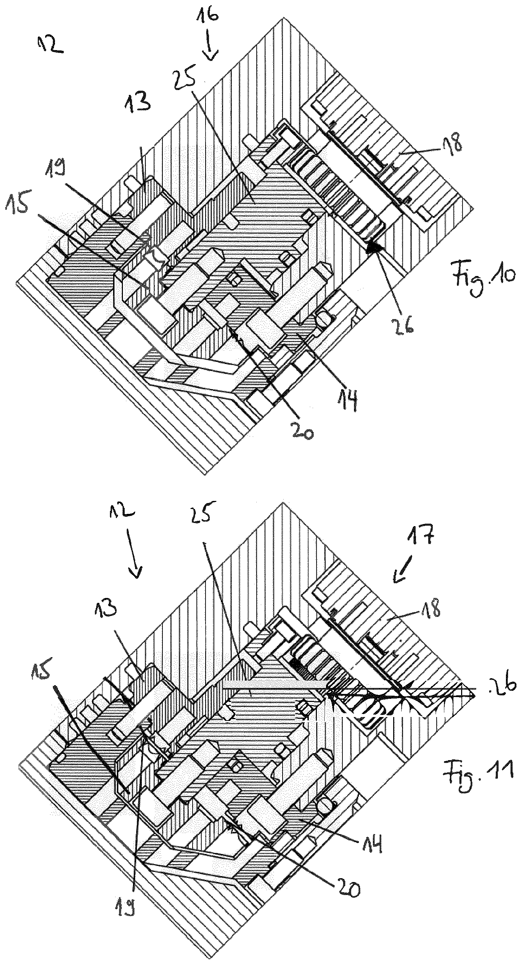

In einer in Fig. 10 gezeigten ersten Arbeitsposition 16 ist die erste Kupplung 12 eingekuppelt. Anders ausgedrückt ist die erste Kupplung 12 in der ersten Arbeitsposition 16 in einem geklemmten Zustand. In der ersten Arbeitsposition 16 ist der erste Zwischenring 15 drehfest mit dem ersten unteren Ring 13 und drehfest mit dem ersten oberen Ring 14 verbunden. Damit ist in der ersten Arbeitsposition 16 eine drehfeste Verbindung zwischen Mittenabschnitt 5 und Werkzeugabschnitt 6 hergestellt. In der ersten Arbeitsposition 16 ist damit der Betriebszustand hergestellt.

In einer in Fig. 11 gezeigten ersten Kuppelposition 17 ist die erste Kupplung 12 ausgekuppelt. Anders ausgedrückt ist die erste Kupplung 12 in der ersten Kuppelposition 17 in einem gelösten Zustand. Der erste Zwischenring 15 ist in der ersten Kuppelposition 17 relativ zum ersten unteren Ring 14 drehbar und relativ zum ersten oberen Ring 13 drehbar. Damit ist in der ersten Kuppelposition 17 der Mittenabschnitt 5 relativ zum Werkzeugabschnitt 4 (bzw. umgekehrt) drehbar.

Wie gut anhand eines Vergleichs der Figuren 10 und 11 ersichtlich ist, wird hierbei nur der Zwischenring 15 in seiner Position verschoben, wohingegen der erste obere Ring 13 und der erste untere Ring 14 die Position nicht ändern. Damit ist die Position des Werkzeugabschnitts 4 in der ersten Kuppelposition 17 und in der ersten Arbeitsposition 18 gleich. Damit können gute Lagerungen vorgesehen sein, so dass die Langlebigkeit des Fräskopfs 1 sichergestellt ist.

Zur Verschiebung des ersten Zwischenrings 15 von der ersten Arbeitsposition 16 in die erste Kuppelposition 17, und insbesondere auch zurück, ist ein erster Kolben 25 vorgesehen. Im Ausführungsbeispiel ist der erste Kolben 25 mit dem ersten Zwischenring 15 verschraubt. Der erste Kolben 25 verfährt in einer Richtung, die etwa parallel zur A-Achse 24 verläuft. Hierbei ist insbesondere die in den Figuren gezeigte A-Achse 24 gemeint. Die Bezeichnung von A-Achse und C-Achse ist abhängig vom Koordinatensystem der Werkzeugmaschine 3 und demnach können die Bezeichnungen in weiteren Ausführungsbeispielen insbesondere abweichen. Die Verstellung des ersten Zwischenrings 15 erfolgt über ein erstes Antriebsritzel 26. Das Antriebsritzel 26 überträgt die Kraft des zweiten Motors 18 über den ersten Kolben 25 auf den ersten Zwischenring 15 in der ersten Kuppelposition 17 (Fig. 10). Das Antriebsritzel 26 entkoppelt in der ersten Arbeitsposition 16 den zweiten Motor 18 vom ersten Kolben 25 (Fig. 11). Die Position des ersten Zwischenrings 15 in der ersten Kuppelposition 17 ist verglichen mit Position des ersten Zwischenrings 15 in der ersten Arbeitsposition 16 parallel zur ersten Drehachse der ersten Welle 8 bzw. insbesondere der Dreh-/Schwenkachse des Mittenabschnitts 5, also parallel zur A-Achse 24, um etwa 3 mm verschoben. Der erste Kolben 25 verfährt also um etwa 3 mm.

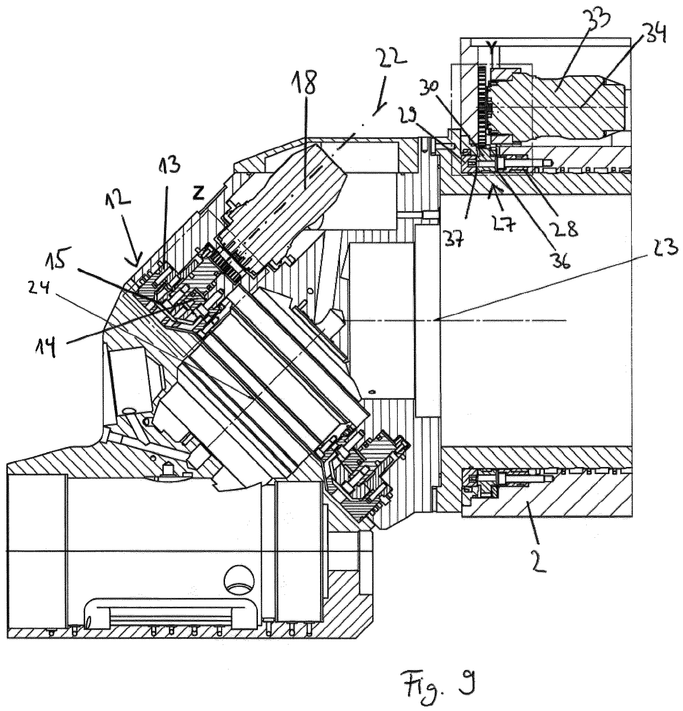

In der ersten Kuppelposition 17 ist die erste Welle 8 von einem ersten in Fig. 3 gezeigten Motor 6 drehbar. Im Ausführungsbeispiel ist der erste Motor 6 der Hauptantrieb 6. Der erste Motor 6 ist hierbei in der Werkzeugmaschine 3 angeordnet. In der ersten Kuppelposition 17 ist der erste Zwischenring 15 von einem in Fig. 7 und 9 gezeigten zweiten Motor 18 drehbar. Der zweite Motor 18 ist hierbei im Fräskopf 1, insbesondere im Mittenabschnitt 5 des Fräskopfs 1 angeordnet.

Der erste Zwischenring 15 ist in der in Fig. 10 gezeigten ersten Arbeitsposition 16 mit einer Anzahl O1 Zähnen über eine erste obere Verzahnung 19 mit dem ersten oberen Ring 13 verzahnt. Der erste Zwischenring 15 ist in der ersten Arbeitsposition 16 mit einer Anzahl U1 Zähnen über eine erste untere Verzahnung 20 mit dem ersten unteren Ring 14 verzahnt.

Aus der Differenz aus den Winkeln zwischen den Zähnen O1 der ersten oberen Verzahnung 19 und der ersten unteren Verzahnung 20, also 360°/O1 - 360°/U1, ergibt sich eine Teilung. Die Anzahl O1 der Zähne der ersten oberen Verzahnung 19 beträgt im Ausführungsbeispiel 360. Damit kann über die erste obere Verzahnung 19 der Mittenabschnitt 5 zum Werkzeugabschnitt 4 mindestens um 1° verstellt werden. Hierbei wird der Mittenabschnitt 5 zum Werkzeugabschnitt 4 um genau einen Zahn der ersten oberen Verzahnung 19 verdreht. Damit ist gewährleistet, dass Winkelverstellungen um 1° unter Vernachlässigung der Maschinengenauigkeit immer exakt abbildbar sind, also ohne einen mathematischen Fehler. Im Übrigen muss hierbei der erste Zwischenring 15 nicht geschwenkt bzw. gedreht werden.

Die Anzahl U1 der Zähne der ersten unteren Verzahnung 20 liegen in einem Bereich zwischen 199 und 357 oder zwischen 363 und 401 liegt. Jedenfalls ergibt die Teilung eine Zahl mit unendlich vielen Dezimalstellen.

Im Ausführungsbeispiel ist die Anzahl U1 der Zähne der unteren Verzahnung 353, andere vorteilhafte Kombinationen von Zähnen, insbesondere von Anzahl U1 der Zähne der unteren Verzahnung, können der Beschreibungseinleitung entnommen werden. Bei einer Kombination von 360 Zähnen der ersten oberen Verzahnung 19 mit 353 Zähnen der ersten unteren Verzahnung 20 ergibt sich eine Teilung von 360°/360 - 360°/353, also von etwa 0,0198300. Würde man konventionell verfahren, so würde dies bedeuten, dass bei dieser Kombination der Fräskopf 1 auf etwa 0,02° positionierbar ist mit einem Fehler von etwa 0,00017°, der sich aus der Differenz aus dem Soll von 0,02° abzüglich der Teilung von etwa 0,0198300° ergibt.

In vorliegendem Ausführungsbeispiel jedoch wird nun die Teilung bzw. die Kombination von den Zähnezahlen 360 und 353 nicht konventionell genutzt, sondern der entstehende Fehler von etwa 0,00017° wird so ausgenutzt, dass eine Positionierung auf etwa 0,01° erreicht werden kann. Dies entspricht der kleinsten möglichen Positionierung im Ausführungsbeispiel. Anders ausgedrückt entspricht die kleinste mögliche Positionierung der kleinsten Verstellung des Mittenabschnitts 5 relativ zum Werkzeugabschnitt 4, bzw. des Mittenabschnitts 5 relativ zum Anbindungsabschnitt, im Ausführungsbeispiel etwa 0,01° beträgt. Denn nach diesem Ausführungsbeispiel wird der Fehler von etwa 0,00017° nicht vernachlässigt, sondern geschickt aufaddiert, so dass eine Positionierung auf etwa 0,01° erreicht werden kann, und nicht lediglich auf 0,02° (bzw. etwa 0,0198300°).

Soll beispielsweise eine Positionierung von 0,03° erfolgen, also der Werkezugabschnitt 4 um 0,03° relativ zum Mittenabschnitt 5 gedreht bzw. geschwenkt werden, so wird die erste untere Verzahnung 20 um 52 Zähne verstellt. Dies ergibt dann eine Verstellung um 360°/353 * 52, also etwa 53,0312°. Die erste obere Verzahnung 19 wird um 53 Zähne zurückgestellt. Dies ergibt eine Verstellung um 360°/360 * 53 Zähne = 53°. Insgesamt wurde damit der Werkezugabschnitt 4 um etwa 0,03° relativ zum Mittenabschnitt 5 gedreht, mit einem mathematischen Fehler von etwa 0,0012°.

Soll beispielsweise eine Positionierung von 0,83° erfolgen, also der Werkezugabschnitt 5 um 0,83° relativ zum Mittenabschnitt 5 gedreht bzw. geschwenkt werden, so wird die erste untere Verzahnung 20 um 294 Zähne verstellt. Dies ergibt dann eine Verstellung um 360°/353 * 294 also etwa 299,83003°. Die erste obere Verzahnung 19 wird um 299 Zähne zurückgestellt. Dies ergibt eine Verstellung um 360°/360 * 299 Zähne = 299°. Insgesamt wurde damit der Werkezugabschnitt 4 um etwa 0,83° relativ zum Mittenabschnitt 5 gedreht, mit einem mathematischen Fehler von etwa 0,00003°, was in guter Rundung 0,0000° entspricht.

Bei Einstellung auf 0,01° bei einer Zähnekombination von 360 mit 353 ergibt sich für sämtliche Winkel von 0,00° bis 360,00° ein mathematischer Fehler im gesamten Bereich, der zwischen 0,0000° und etwa 0,0014° liegt. Der mathematische Fehler liegt zweckmäßig innerhalb der Maschinengenauigkeit. Damit ergibt sich im Ausführungsbeispiel nicht nur eine Teilung, die kleiner 0,02° ist. Sondern es ergibt sich im Ausführungsbeispiel eine maximale Abweichung zwischen Sollposition und Istposition, die bei etwa 0,0015° liegt, insbesondere ist die maximale Abweichung kleiner als etwa 0,0015°.

Wie gut in Fig. 3 zu sehen ist, dreht der erste Motor 6 um eine Drehachse 21. Die Drehachse 21 des ersten Motors 6 ist hierbei identisch mit einer sogenannten C-Achse 23, wie sie in Fig. 9 gezeigt ist. Der zweite Motor 18 dreht um eine Drehachse 22. Die Drehachse 22 des zweiten Motors 18 liegt parallel zu einer sogenannten A-Achse 24. Die A-Achse 24 ist die Achse, um welche sich die erste Welle 8 bzw. der Werkzeugabschnitt 4 dreht, also insbesondere identisch mit der Drehachse der ersten Welle 8 bzw. der Drehachse des Werkzeugabschnitts 4. Im Ausführungsbeispiel steht die Drehachse 21 des ersten Motors 6 in einem Winkel von 45° auf der Drehachse 22 des zweiten Motors 18. Im Ausführungsbeispiel steht damit die C-Achse 23 in einem Winkel von 45° auf der A-Achse 24. Es handelt sich somit um einen 45°-Fräskopf. Insbesondere ist die erste Welle 8 mit der dritten Welle 10 über ein Getriebe, insbesondere Zahnradgetriebe drehfest verbunden, und insbesondere ist die erste Welle 8 und die vierte Welle 10 identisch.

Die vorgenannten Ausführungen haben sich im Wesentlichen mit der Drehbarkeit des Werkzeugabschnitts 4 relativ zum Mittenabschnitt 5 bezogen. Im Nachfolgenden soll anhand der Figuren 7 bis 9, 12 und 13 die Drehbarkeit des Mittenabschnitts 5 relativ zum Anbindungsabschnitt 2 beschrieben werden.

Die Werkzeugmaschine 3 umfasst den Anbindungsabschnitt 2. Der Anbindungsabschnitt 2 ist mit dem Mittenabschnitt 5 des Fräskopfs 1 über eine zweite Kupplung 27 verbunden ist. Die zweite Kupplung 27 umfasst einen zweiten oberen Ring 28, einen zweiten unteren Ring 29 und einen zweiten Zwischenring 30. Der zweite obere Ring 28 ist mit dem Anbindungsabschnitt 2 drehfest verbunden. Der zweite untere Ring 29 ist mit dem Mittenabschnitt 5 drehfest verbunden. Zwischen dem zweiten oberen Ring 28 und dem zweiten unteren Ring 29 ist der zweite Zwischenring 30 angeordnet.

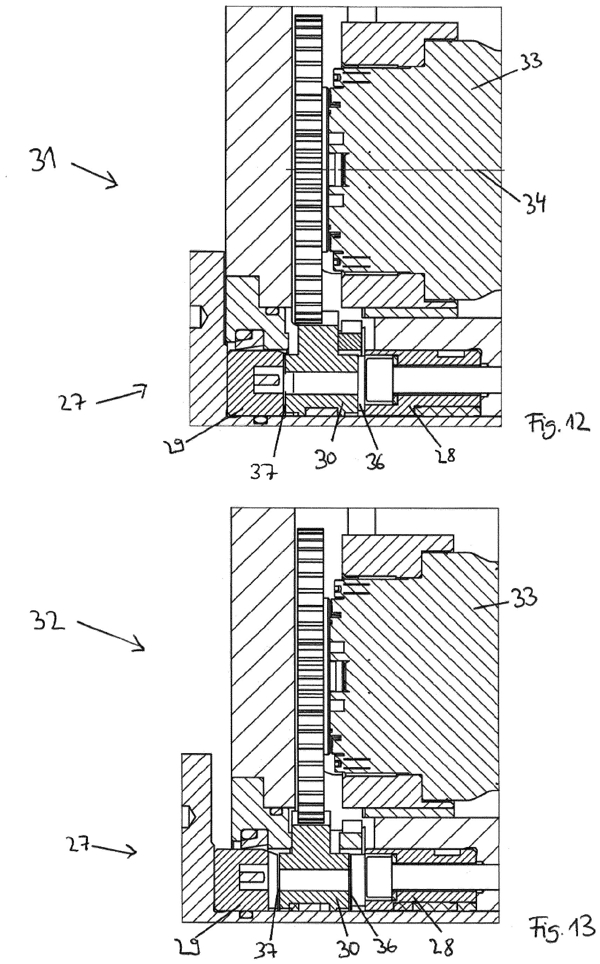

In einer in Fig. 12 gezeigten zweiten Arbeitsposition 31 ist die zweite Kupplung 27 eingekuppelt. In der zweiten Arbeitsposition 31 ist der zweite Zwischenring 30 drehfest mit dem zweiten unteren Ring 29 und drehfest mit dem zweiten oberen Ring 28 verbunden, so dass in der zweiten Arbeitsposition 31 eine drehfeste Verbindung zwischen Mittenabschnitt 5 und Anbindungsabschnitt 2 hergestellt ist. In einer in Fig. 13 gezeigten zweiten Kuppelposition 32 ist die zweite Kupplung 27 ausgekuppelt. Der zweite Zwischenring 30 ist relativ zum zweiten unteren Ring 28 drehbar und relativ zum zweiten oberen Ring 29 drehbar, so dass in der zweiten Kuppelposition 32 der Mittenabschnitt 5 relativ zum Anbindungsabschnitt 2 drehbar ist. In der zweiten Kuppelposition 32 ist der zweite obere Ring 28 von einem in Fig. 3 gezeigten dritten Motor 38 drehbar angetrieben. In der zweiten Kuppelposition 32 ist der zweite Zwischenring 30 von einem vierten Motor 34 drehbar angetrieben. Es versteht sich im Übrigen von selbst, dass die zweite Kupplung 27 und/oder Teile der zweiten Kupplung 27 und/oder der dritte Motor 38 und/oder vierter Motor 33 und/oder Hauptantrieb 6 in der Fräsmaschine 3 anordenbar sein können. Es versteht sich weiter von selbst, dass der Anbindungsabschnitt 2 und/oder Teile des Anbindungsabschnitts 2 und/oder Teile der zweiten Kupplung 27 im Fräskopf 1 anordenbar sein können. Im Sinne der Erfindung kann in diesem Spezialfall der Begriff "Fräskopf" weit ausgelegt werden, so dass, auch wenn der Fräskopf 1 im von der Fräsmaschine 3 abgekoppelten Zustand zweite Kupplung 27 und/oder Teile der zweiten Kupplung 27 und/oder dritter Motor 38 und/oder vierter Motor 33 und/oder Hauptantrieb 6 körperlich nicht umfasst, diese für den Schwenkbetrieb der Mittenabschnitts 5 relativ zum Anbindungsabschnitt 2 erforderlichen Komponenten als zum Fräskopf 1 gehörend zu interpretieren sein können.

Der dritte Motor 38 ist im Ausführungsbeispiel separat zum Hauptantrieb 6. In einem weiteren Ausführungsbeispiel kann der dritte Motor 38 identisch zum Hauptantrieb 6 sein. Der dritte Motor 38 dreht parallel zu der C-Achse 23. Der vierte Motor 33 dreht um eine Drehachse 34. Die Drehachse 34 des vierten Motors 34 verläuft im Ausführungsbeispiel etwa parallel zur Drehachse des dritten Motors 38. In einem weiteren Ausführungsbeispiel kann die Drehachse 34 des vierten Motors 34 unparallel zur Drehachse des dritten Motors 38 verlaufen. Die Position des zweiten unteren Rings 29 ist in der in Fig. 13 gezeigten zweiten Kuppelposition 32 verglichen mit der in Fig. 12 gezeigten zweiten Arbeitsposition 31 parallel zur dritten Drehachse der dritten Welle 10 verschoben, insbesondere um etwa 6 mm verschoben. Die Position des zweiten Zwischenrings 30 ist in der zweiten Kuppelposition 32 verglichen mit der zweiten Arbeitsposition 31 parallel zur dritten Drehachse der dritten Welle 10 bzw. des Anbindungsabschnitts 2 verschoben ist, insbesondere um etwa 3 mm verschoben. Die dritte Drehachse der dritten Welle 10 bzw. des Anbindungsabschnitts 2 entspricht im Ausführungsbeispiel der C-Achse 23. Die Verschiebung erfolgt mithilfe eines in Fig. 8 gezeigten zweiten Kolbens 35. Darüber hinaus bewegt eine Feder den zweiten Zwischenring 30 von der zweiten Arbeitsposition 31 in die zweite Kuppelposition 32.

Der zweite Zwischenring 30 ist mit einer Anzahl O2 Zähnen über eine zweite obere Verzahnung 36 mit dem zweiten oberen Ring 28 verzahnt. Der zweite Zwischenring 30 ist mit einer Anzahl U2 Zähnen über eine zweite untere Verzahnung 37 mit dem zweiten unteren Ring 29 verzahnt. Aus der Differenz aus dem Winkel zwischen den Zähnen der zweiten oberen Verzahnung 36 und der zweiten unteren Verzahnung 37, also 360°/O2 - 360°/U2, eine zweite Teilung ergibt. Die Anzahl O2 der Zähne der zweiten oberen Verzahnung 36 beträgt im Ausführungsbeispiel 360. Die Anzahl U2 der Zähne der zweiten unteren Verzahnung 37 liegt im Ausführungsbeispiel zwischen 199 und 357 oder zwischen 363 und 401.

Die Teilung ist eine Zahl mit unendlich vielen Dezimalstellen. Die Anzahl U2 der Zähne der zweiten unteren Verzahnung 37 entspricht im Ausführungsbeispiel der Anzahl U1 der Zähne der ersten unteren Verzahnung 20. Im Ausführungsbeispiel entspricht die Anzahl U2 der Zähne der zweiten unteren Verzahnung 353.

In tabellarischer Form sollen nachfolgend weitere vorteilhafte Kombinationen von Zähnen der zweiten oberen mit der ersten unteren Verzahnung angegeben werden:

| O2 oder U2 | U2 oder O2 | gerundeter maximaler Fehler |
|---|---|---|
| 360 | 337 | 0,00148368 |
| 360 | 341 | 0,00146628 |
| 360 | 343 | 0,00145773 |
| 360 | 347 | 0,00144092 |
| 360 | 349 | 0,00143266 |
| 360 | 353 | 0,00141643 |
| 360 | 359 | 0,00139276 |
| 360 | 361 | 0,00138504 |
| 360 | 367 | 0,00136240 |
| 360 | 371 | 0,00134771 |
| 360 | 373 | 0,00134048 |
| 360 | 377 | 0,00132626 |
| 360 | 379 | 0,00131926 |
| 360 | 383 | 0,00130548 |
| 360 | 389 | 0,00128535 |
| 360 | 391 | 0,00127877 |
| 360 | 397 | 0,00125945 |

In obiger Tabelle ist die maximale Abweichung als gerundeter maximaler Fehler angegeben.

Die Teilung ist eine Zahl mit unendlich vielen Dezimalstellen, wobei entweder die dritte Dezimalstelle und/oder die vierte Dezimalstelle der Teilung ungleich 0 ist. Zweckmäßig ist die dritte Dezimalstelle der Teilung 7, 8, 9, 0, 1, 2 oder 3. Zweckmäßig ist die vierte Dezimalstelle der Teilung 7, 8, 9, 0, 1, 2 oder 3 ist. Im Ausführungsbeispiel, bei einer Kombination von 360 mit 353 Zähnen, beträgt die dritte Dezimalstelle der Teilung 9 und die vierte Dezimalstelle der Teilung 8.

Insbesondere wird unabhängig von den Ansprüchen beansprucht: Fräskopf 1 für eine Werkzeugmaschine 3, insbesondere Fräsmaschine, insbesondere nach einem der Ansprüche 1 bis 7, mit einem Mittenabschnitt 5, wobei der Mittenabschnitt 5 mit einem Anbindungsabschnitt 2 über eine zweite Kupplung 27 verbindbar ist, wobei die zweite Kupplung 27 einen zweiten oberen Ring 28, einen zweiten unteren Ring 29 und einen zweiten Zwischenring 30 umfasst, wobei der zweite obere Ring 28 mit dem Anbindungsabschnitt 2 drehfest verbunden ist, wobei der zweite untere Ring 29 mit dem Mittenabschnitt 5 drehfest verbunden ist, und wobei zwischen dem zweiten oberen Ring 28 und dem zweiten unteren Ring 29 der zweite Zwischenring 30 angeordnet ist, wobei der zweite Zwischenring 30 mit einer Anzahl O2 Zähnen über eine zweite obere Verzahnung 36 mit dem zweiten oberen Ring 28 verzahnt ist, und wobei der zweite Zwischenring 30 mit einer Anzahl U2 Zähnen über eine zweite untere Verzahnung 37 mit dem zweiten unteren Ring 29 verzahnt ist, und wobei sich aus der Differenz aus den Winkeln zwischen den Zähnen der zweiten oberen Verzahnung 36 und der zweiten unteren Verzahnung 37, also 360°/O2 - 360°/U2, eine zweite Teilung ergibt, wobei die zweite Teilung eine Zahl mit unendlich vielen Dezimalstellen ist, und wobei entweder die dritte Dezimalstelle und/oder die vierte Dezimalstelle der Teilung ungleich 0 ist. Vorteilhaft umfasst die Fräsmaschine den Anbindungsabschnitt 2. Es kann zweckmäßig sein, wenn der Fräskopf 1 den Anbindungsabschnitt 2 umfasst.

Nachfolgend soll nochmals beispielhaft ein mögliches Verfahren beschrieben werden, wie der Fräskopf 1 positioniert werden kann.

Eine in den Figuren nicht gezeigte eine Steuereinheit vergleicht eine erste Istposition des Mittenabschnitts 5 relativ zum Werkzeugabschnitt 4 mit einer ersten Sollposition des Mittenabschnitts 5 relativ zum Werkzeugabschnitt 4. Die Istposition ist die Position, in der der Mittenabschnitt 5 relativ zum Werkzeugabschnitt 4 aktuell, also zum Ist-Zeitpunkt steht. Die Sollposition ist die Position, in der der Mittenabschnitt 5 relativ zum Werkzeugabschnitt 4 gebracht werden soll, um beispielsweise einen anderen Fräswinkel oder dergleichen anfahren zu können.

Die Steuereinheit berechnet unter Berücksichtigung der Teilung mindestens zwei, bevorzugt sämtliche, mögliche Realpositionen, wie der Mittenabschnitt 5 relativ zum Werkzeugabschnitt 4 in eine erste Realposition ausrichtbar ist. Unter Realposition ist die Position zu verstehen, die tatsächlich erreichbar ist. Die Steuereinheit wählt unter den berechneten möglichen Realpositionen die erste Realposition aus, bei der die geringste Abweichung zwischen erster Sollposition und erster Realposition besteht. Unter Heranziehung des obigen Beispiels einer Kupplung mit 360 und 353 Zähnen, so ist unter Sollposition beispielsweise 0,03° zu verstehen, wobei sich dann die Realposition von 0,0312° ergibt. Unter geringster Abweichung ist in diesem Beispiel zu verstehen, dass es keine Realposition gibt, die näher an der 0,03° Sollposition liegt, als die vorgenannte Realposition von 0,0312°.

Schließlich wird die erste Realposition des Mittenabschnitts 5 relativ zum Werkzeugabschnitt 4 (bzw. umgekehrt) eingestellt.

Zur Einstellung der ersten Realposition des Mittenabschnitts 5 relativ zum Werkzeugabschnitt 4 werden der erste obere Ring 13 und der erste Zwischenring 15 verstellt, und der erste obere Ring 13 und der erste Zwischenring 15 werden in entgegengesetzter Drehrichtung verstellt. Meist spart dies Zeit, so dass die Verstellung schneller erfolgt. Es kann zweckmäßig sein, wenn die Ringe in gleicher Drehrichtung verstellt werden. Insbesondere kann zweckmäßig sein, dass die Steuereinheit berechnet, welche Drehrichtung, also gleich- oder gegensinnig schneller ist, und die Steuereinheit dann die schnellere Drehrichtung auswählt.

Zur Einstellung der ersten Realposition wird der erste Zwischenring 15 soweit gedreht, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht. Zur Einstellung der ersten Realposition wird der erste obere Ring 13 soweit gedreht, dass bezüglich der Vorkommastellen der Abweichung zwischen erster Sollposition und erster Realposition die geringste Abweichung zwischen erster Sollposition und erster Realposition besteht. Damit ist ein guter Algorithmus vorgesehen, um die Ringe entsprechend drehen zu können.

Zur Einstellung der ersten Realposition wird der erste obere Ring 13 soweit gedreht, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht. Zur Einstellung der ersten Realposition wird der erste Zwischenring 15 soweit gedreht wird, dass bezüglich der Vorkommastellen der Abweichung zwischen erster Sollposition und erster Realposition die geringste Abweichung zwischen erster Sollposition und erster Realposition besteht.

Eine in den Figuren nicht gezeigte Steuereinheit, die bevorzugt identisch zur oben genannten Steuereinheit ist, vergleicht eine zweite Istposition des Anbindungsabschnitts 2 relativ zum Mittenabschnitt 5 mit einer zweiten Sollposition des Anbindungsabschnitts 2 relativ zum Mittenabschnitt 5. Die Steuereinheit berechnet unter Berücksichtigung der zweiten Teilung mindestens zwei, bevorzugt sämtliche, mögliche Realpositionen, wie der Anbindungsabschnitt 2 relativ zum Mittenabschnitt 5 in eine zweite Realposition ausrichtbar ist. Die Steuereinheit wählt unter den berechneten möglichen Realpositionen die zweite Realposition aus, bei der die geringste Abweichung zwischen zweiter Sollposition und zweiter Realposition besteht. Die zweite Realposition des Anbindungsabschnitts 2 relativ zum Mittenabschnitt 5 (bzw. umgekehrt) wird eingestellt. Im Übrigen können sich die Verfahrensschritte von erster Kupplung 12 und zweiter Kupplung 27 ähnlich, insbesondere identisch, sein.

In der ersten Kuppelposition 17 werden der erste obere Ring 13 vom ersten Motor 6 und der erste Zwischenring 15 vom zweiten Motor 18, insbesondere zeitgleich, gedreht. In der zweiten Kuppelposition 32 werden der zweite obere Ring 28 vom dritten Motor 38 und der zweite Zwischenring 30 vom vierten Motor 33, insbesondere zeitgleich, gedreht. In der ersten Kuppelposition 17 werden der erste obere Ring 13 und der erste Zwischenring 15 in entgegengesetzter Drehrichtung verstellt werden. In der zweiten Kuppelposition 32 werden der zweite obere Ring 28 und der zweite Zwischenring 30 in entgegengesetzter Drehrichtung verstellt.

Ganz konkret kann eine Positionierung mithilfe der ersten Kupplung 12 wie folgt erfolgen:
- Der erste Kolben 25 der A-Achse 24 hebt um etwa 3 mm ab, so dass insbesondere die erste Kuppelposition 17 entsteht.
- Die Steuerung berechnet die Position des ersten Zwischenrings 15 mit der geringsten Abweichung.
- Es erfolgt die Positionierung des Werkzeugabschnitts 4 über den Hauptantrieb 6.
- Insbesondere kann eine mögliche eingradige Positionierung über den Hauptantrieb 6 bei einer Zähnezahl von 360 erfolgen.
- Zeitgleich erfolgt die Positionierung des ersten Zwischenrings 15 über das erste Antriebsritzel 26 des ersten Kolbens 25.
- Sobald die beiden Positionen erreicht wurden, zieht der erste Kolben 25 wieder in die Hirthverzahnung ein, so dass insbesondere die erste Arbeitsposition 16 entsteht.
- Für eine ganzgradige Positionierung des Werkzeugabschnitts 4, insbesondere bei einer Zähnezahl von 360 der ersten oberen Verzahnung 19, muss der erste Zwischenring 15 nicht geschwenkt werden.

Ganz konkret kann eine Positionierung mithilfe der zweiten Kupplung 27 wie folgt erfolgen:
- Die Fräskopfaufnahme hebt um etwa 6 mm ab, der zweite Zwischenring 30 hebt über Federn um etwa 3 mm ab, so dass insbesondere die zweite Kuppelposition 32 entsteht.
- Die Steuerung berechnet die Position des zweiten Zwischenrings 30 mit der geringsten Abweichung.
- Es erfolgt die Positionierung des Mittenabschnitts 5 über den dritten Motor 38.
- Insbesondere kann eine mögliche eingradige Positionierung bei einer Zähnezahl von 360 über ein separates Schwenkgetriebe und/oder über den dritten Motor 38 erfolgen.
- Zeitgleich erfolgt die Positionierung des zweiten Zwischenrings 30 über das Antriebsritzel des vierten Motors 33.
- Sobald beide Positionen erreicht wurden, zieht der zweite Kolben 35 wieder in die Hirtverzahnung ein, so dass insbesondere die zweite Arbeitsposition 31 entsteht.
- Für eine ganzgradige Positionierung des Mittenabschnitts 5, insbesondere bei einer Zähnezahl von 360 der zweiten unteren Verzahnung 37, muss der Zwischenring 30 nicht geschwenkt werden.

Im Ausführungsbeispiel weist der Fräskopf 1 ein Klemmmoment A-Achse 24 von etwa 8000 Nm auf. Im Ausführungsbeispiel weist der Fräskopf 1 ein Klemmmoment der C-Achse 23 von etwa 8000 Nm auf.

Im Ausführungsbeispiel weist der Fräskopf 1 ein Schwenkmoment des Antriebs, insbesondere vierter Motor 33, des Zwischenrings A-Achse 24 von etwa 54 Nm auf. Im Ausführungsbeispiel weist der Fräskopf ein Schwenkmoment des Antriebs des Zwischenrings C-Achse, insbesondere zweiter Motor 18, von etwa 54 Nm auf. Der erste Zwischenring 15 kann im Übrigen in Form einer Zahnringbrücke ausgebildet sein, wie beispielsweise gut in Fig. 9 zu sehen ist.

Unabhängig von den Ansprüchen wird Schutz beansprucht für die nachfolgenden Absätze.

Fräskopf für eine Werkzeugmaschine 3, insbesondere Fräsmaschine, mit einem Mittenabschnitt 5 und einem Werkzeugabschnitt 4, wobei der Mittenabschnitt 5 mit dem Werkzeugabschnitt 4 über eine erste Kupplung 12 verbunden ist, wobei die erste Kupplung 12 einen ersten oberen Ring 13, einen ersten unteren Ring 14 und einen ersten Zwischenring 15 umfasst, wobei der erste obere Ring 13 mit dem Mittenabschnitt 5 drehfest verbunden ist, wobei der erste untere Ring 14 mit dem Werkzeugabschnitt 4 drehfest verbunden ist, und wobei zwischen dem ersten oberen Ring 13 und dem ersten unteren Ring 14 der erste Zwischenring 15 angeordnet ist, wobei der erste Zwischenring 15 mit einer Anzahl O1 Zähnen über eine erste obere Verzahnung 19 mit dem ersten oberen Ring 13 verzahnt ist, und wobei der erste Zwischenring 15 mit einer Anzahl U1 Zähnen über eine erste untere Verzahnung 20 mit dem ersten unteren Ring 14 verzahnt ist, und wobei sich aus der Differenz aus den Winkeln zwischen den Zähnen der ersten oberen Verzahnung 19 und der ersten unteren Verzahnung 20, also 360°/O1 - 360°/U1, eine Teilung ergibt, dadurch gekennzeichnet, dass die Teilung eine Zahl mit unendlich vielen Dezimalstellen ist, und wobei die dritte Dezimalstelle und/oder die vierte Dezimalstelle der Teilung ungleich 0 ist.

Fräskopf, wobei der Fräskopf 1 einen Anbindungsabschnitt 2 umfasst, wobei der Anbindungsabschnitt 2 mit dem Mittenabschnitt 5 über eine zweite Kupplung 27 verbunden ist, wobei die zweite Kupplung 27 einen zweiten oberen Ring 28, einen zweiten unteren Ring 29 und einen zweiten Zwischenring 30 umfasst, wobei der zweite obere Ring 28 mit dem Anbindungsabschnitt 2 drehfest verbunden ist, wobei der zweite untere Ring 29 mit dem Mittenabschnitt 5 drehfest verbunden ist, und wobei zwischen dem zweiten oberen Ring 28 und dem zweiten unteren Ring 29 der zweite Zwischenring 30 angeordnet ist, wobei der zweite Zwischenring 30 mit einer Anzahl O2 Zähnen über eine zweite obere Verzahnung 36 mit dem zweiten oberen Ring 28 verzahnt ist, und wobei der zweite Zwischenring 30 mit einer Anzahl U2 Zähnen über eine zweite untere Verzahnung 37 mit dem zweiten unteren Ring 29 verzahnt ist, und wobei sich aus der Differenz aus dem Winkel zwischen den Zähnen der oberen Verzahnung 36 und der unteren Verzahnung 37, also 360°/O2 - 360°/U2, eine zweite Teilung ergibt, wobei die zweite Teilung eine Zahl mit unendlich vielen Dezimalstellen ist, und wobei die dritte Dezimalstelle und/oder die vierte Dezimalstelle der Teilung ungleich 0 ist.

Fräskopf mit einem Mittenabschnitt 5 und einem Werkzeugabschnitt 4, wobei der Mittenabschnitt 5 mit dem Werkzeugabschnitt 4 über eine erste Kupplung 12 verbunden ist, wobei die erste Kupplung 12 einen ersten oberen Ring 13, einen ersten unteren Ring 14 und einen ersten Zwischenring 15 umfasst, wobei der erste obere Ring 13 mit dem Mittenabschnitt 5 drehfest verbunden ist, wobei der erste untere Ring 14 mit dem Werkzeugabschnitt 4 drehfest verbunden ist, und wobei zwischen dem ersten oberen Ring 13 und dem ersten unteren Ring 14 der erste Zwischenring 15 angeordnet ist, wobei der erste Zwischenring 15 mit einer Anzahl O1 Zähnen über eine erste obere Verzahnung 19 mit dem ersten oberen Ring 13 verzahnt ist, und wobei der erste Zwischenring 15 mit einer Anzahl U1 Zähnen über eine erste untere Verzahnung 20 mit dem ersten unteren Ring 14 verzahnt ist, und wobei sich aus der Differenz aus den Winkeln zwischen den Zähnen der ersten oberen Verzahnung 19 und der ersten unteren Verzahnung 20, also 360°/O1 - 360°/U1, eine Teilung ergibt, dadurch gekennzeichnet, dass die Anzahl O1 der Zähne einer der ersten oberen oder ersten unteren, vorteilhaft der ersten oberen, Verzahnung 19, 20 360 beträgt, dass die Anzahl U1 der Zähne der anderen der ersten oberen oder ersten unteren, vorteilhaft der ersten unteren, Verzahnung 20, 19 zwischen 199 und 357 oder zwischen 363 und 401 liegt, und wobei die Teilung eine Zahl mit unendlich vielen Dezimalstellen ist.

Fräskopf, wobei der Fräskopf 1 einen Anbindungsabschnitt 2 umfasst, wobei der Anbindungsabschnitt 2 mit dem Mittenabschnitt 5 über eine zweite Kupplung 27 verbunden ist, wobei die zweite Kupplung 27 einen zweiten oberen Ring 28, einen zweiten unteren Ring 29 und einen zweiten Zwischenring 30 umfasst, wobei der zweite obere Ring 28 mit dem Anbindungsabschnitt 2 drehfest verbunden ist, wobei der zweite untere Ring 29 mit dem Mittenabschnitt 5 drehfest verbunden ist, und wobei zwischen dem zweiten oberen Ring 28 und dem zweiten unteren Ring 29 der zweite Zwischenring 30 angeordnet ist, wobei der zweite Zwischenring 30 mit einer Anzahl O2 Zähnen über eine zweite obere Verzahnung 36 mit dem zweiten oberen Ring 28 verzahnt ist, und wobei der zweite Zwischenring 30 mit einer Anzahl U2 Zähnen über eine zweite untere Verzahnung 37 mit dem zweiten unteren Ring 29 verzahnt ist, und wobei sich aus der Differenz aus dem Winkel zwischen den Zähnen der oberen Verzahnung 36 und der unteren Verzahnung 37, also 360°/O2 - 360°/U2, eine zweite Teilung ergibt, wobei die Anzahl O2 der Zähne der zweiten oberen oder zweiten unteren, vorteilhaft der zweiten oberen Verzahnung 36, 37 beträgt 360, wobei die Anzahl U2 der Zähne der anderen zweiten oberen oder zweiten unteren, vorteilhaft der zweiten unteren Verzahnung 37, 36 zwischen 199 und 357 oder zwischen 363 und 401 liegt, und wobei die zweite Teilung eine Zahl mit unendlich vielen Dezimalstellen ist.

Fräskopf, wobei der Fräskopf 1 ein 45°-Fräskopf ist, insbesondere dass die Drehachse des Mittenabschnitts 5 und die Drehachse des Anbindungsabschnitts 2 in einem Winkel von 45° stehen.

## Patentansprüche

1. Fräskopf für eine Werkzeugmaschine (3), insbesondere Fräsmaschine, mit einem Mittenabschnitt (5) und einem Werkzeugabschnitt (4), wobei der Mittenabschnitt (5) mit dem Werkzeugabschnitt (4) über eine erste Kupplung (12) verbunden ist, wobei die erste Kupplung (12) einen ersten oberen Ring (13), einen ersten unteren Ring (14) und einen ersten Zwischenring (15) umfasst, wobei der erste obere Ring (13) mit dem Werkzeugabschnitt (4) oder dem Mittenabschnitt (5), bevorzugt mit dem Werkzeugabschnitt (4), drehfest verbunden ist, wobei der erste untere Ring (14) mit dem Mittenabschnitt (5) oder dem Werkzeugabschnitt (4), bevorzugt mit dem Mittenabschnitt (5), drehfest verbunden ist, und wobei zwischen dem ersten oberen Ring (13) und dem ersten unteren Ring (14) der erste Zwischenring (15) angeordnet ist, wobei der erste Zwischenring (15) mit einer Anzahl O1 Zähnen über eine erste obere Verzahnung (19) mit dem ersten oberen Ring (13) verzahnt ist, und wobei der erste Zwischenring (15) mit einer Anzahl U1 Zähnen über eine erste untere Verzahnung (20) mit dem ersten unteren Ring (14) verzahnt ist, und wobei sich aus der Differenz aus den Winkeln zwischen den Zähnen der ersten oberen Verzahnung (19) und der ersten unteren Verzahnung (20), also 360°/O1 - 360°/U1, eine Teilung ergibt, **dadurch gekennzeichnet, dass** die Teilung eine Zahl mit unendlich vielen Dezimalstellen ist, und wobei die dritte Dezimalstelle und/oder die vierte Dezimalstelle der Teilung ungleich 0 ist.

2. Fräskopf nach Anspruch 1,
**dadurch gekennzeichnet, dass** der Mittenabschnitt (4) relativ zum Werkzeugabschnitt (5) um etwa 0,04°, insbesondere um etwa 0,01°, positionierbar ist.

3. Fräskopf nach Anspruch 1 oder 2,
**dadurch gekennzeichnet, dass** eine Abweichung von einer Istposition des Mittenabschnitts (5) relativ zum Werkzeugabschnitt (4) zu einer Sollposition des Mittenabschnitts (5) relativ zum Werkzeugabschnitt (4) kleiner als etwa 0,004°, insbesondere kleiner als etwa 0,0015° ist.

4. Fräskopf nach einem der Ansprüche 1 bis 3,
**dadurch gekennzeichnet, dass** der Fräskopf (1) an einen Anbindungsabschnitt (2) anbindbar ist, wobei der Anbindungsabschnitt (2) mit dem Mittenabschnitt (5) über eine zweite Kupplung (27) verbindbar ist, wobei die zweite Kupplung (27) einen zweiten oberen Ring (28), einen zweiten unteren Ring (29) und einen zweiten Zwischenring (30) umfasst, wobei der zweite obere Ring (28) mit dem Anbindungsabschnitt (2) drehfest verbunden ist, wobei der zweite untere Ring (29) mit dem Mittenabschnitt (5) drehfest verbunden ist, und wobei zwischen dem zweiten oberen Ring (28) und dem zweiten unteren Ring (29) der zweite Zwischenring (30) angeordnet ist, wobei der zweite Zwischenring (30) mit einer Anzahl O2 Zähnen über eine zweite obere Verzahnung (36) mit dem zweiten oberen Ring (28) verzahnt ist, und wobei der zweite Zwischenring (30) mit einer Anzahl U2 Zähnen über eine zweite untere Verzahnung (37) mit dem zweiten unteren Ring (29) verzahnt ist, und wobei sich aus der Differenz aus dem Winkel zwischen den Zähnen der oberen Verzahnung (36) und der unteren Verzahnung (37), also 360°/O2 - 360°/U2, eine zweite Teilung ergibt, wobei die zweite Teilung eine Zahl mit unendlich vielen Dezimalstellen ist, und wobei die dritte Dezimalstelle und/oder die vierte Dezimalstelle der Teilung ungleich 0 ist.

5. Fräskopf für eine Werkzeugmaschine (3), insbesondere Fräsmaschine, insbesondere nach einem der Ansprüche 1 bis 4, mit einem Mittenabschnitt (5) und einem Werkzeugabschnitt (4), wobei der Mittenabschnitt (5) mit dem Werkzeugabschnitt (4) über eine erste Kupplung (12) verbunden ist, wobei die erste Kupplung (12) einen ersten oberen Ring (13), einen ersten unteren Ring (14) und einen ersten Zwischenring (15) umfasst, wobei der erste obere Ring (13) mit dem Werkzeugabschnitt (4) oder dem Mittenabschnitt (5), bevorzugt mit dem Werkzeugabschnitt (4), drehfest verbunden ist, wobei der erste untere Ring (14) mit dem Mittenabschnitt (5) oder dem Werkzeugabschnitt (4), bevorzugt mit dem Mittenabschnitt (5), drehfest verbunden ist, und wobei zwischen dem ersten oberen Ring (13) und dem ersten unteren Ring (14) der erste Zwischenring (15) angeordnet ist, wobei der erste Zwischenring (15) mit einer Anzahl O1 Zähnen über eine erste obere Verzahnung (19) mit dem ersten oberen Ring (13) verzahnt ist, und wobei der erste Zwischenring (15) mit einer Anzahl U1 Zähnen über eine erste untere Verzahnung (20) mit dem ersten unteren Ring (14) verzahnt ist, und wobei sich aus der Differenz aus den Winkeln zwischen den Zähnen der ersten oberen Verzahnung (19) und der ersten unteren Verzahnung (20), also 360°/O1 - 360°/U1, eine Teilung ergibt,
**dadurch gekennzeichnet, dass** die Anzahl O1 der Zähne einer der ersten oberen oder ersten unteren, vorteilhaft der ersten oberen, Verzahnung (19, 20) 360 beträgt, dass die Anzahl U1 der Zähne der anderen der ersten oberen oder ersten unteren, vorteilhaft der ersten unteren, Verzahnung (20, 19) zwischen 199 und 357 oder zwischen 363 und 401 liegt, und wobei die Teilung eine Zahl mit unendlich vielen Dezimalstellen ist.

6. Fräskopf nach einem der Ansprüche 1 bis 5,
**dadurch gekennzeichnet, dass** die Anzahl U1 der Zähne der anderen ersten oberen oder ersten unteren, vorteilhaft der ersten unteren, Verzahnung (20, 19) 353, insbesondere 383, beträgt.

7. Fräskopf nach einem der Ansprüche 1 bis 6,
**dadurch gekennzeichnet, dass** die Teilung kleiner 0,02° ist.

8. Fräskopf nach einem der Ansprüche 1 bis 7,
**dadurch gekennzeichnet, dass** eine maximale Abweichung zwischen Sollposition und Istposition bei etwa 0,0015° liegt, insbesondere dass die maximale Abweichung kleiner als etwa 0,0015° ist.

9. Fräskopf nach einem der Ansprüche 1 bis 8,
**dadurch gekennzeichnet, dass** der Fräskopf (1) an einen Anbindungsabschnitt (2) anbindbar ist, wobei der Anbindungsabschnitt (2) mit dem Mittenabschnitt (5) über eine zweite Kupplung (27) verbindbar ist, wobei die zweite Kupplung (27) einen zweiten oberen Ring (28), einen zweiten unteren Ring (29) und einen zweiten Zwischenring (30) umfasst, wobei der zweite obere Ring (28) mit dem Anbindungsabschnitt (2) drehfest verbunden ist, wobei der zweite untere Ring (29) mit dem Mittenabschnitt (5) drehfest verbunden ist, und wobei zwischen dem zweiten oberen Ring (28) und dem zweiten unteren Ring (29) der zweite Zwischenring (30) angeordnet ist, wobei der zweite Zwischenring (30) mit einer Anzahl O2 Zähnen über eine zweite obere Verzahnung (36) mit dem zweiten oberen Ring (28) verzahnt ist, und wobei der zweite Zwischenring (30) mit einer Anzahl U2 Zähnen über eine zweite untere Verzahnung (37) mit dem zweiten unteren Ring (29) verzahnt ist, und wobei sich aus der Differenz aus dem Winkel zwischen den Zähnen der oberen Verzahnung (36) und der unteren Verzahnung (37), also 360°/O2 - 360°/U2, eine zweite Teilung ergibt, wobei die Anzahl O2 der Zähne der zweiten oberen oder zweiten unteren, vorteilhaft der zweiten oberen Verzahnung (36, 37) beträgt 360, wobei die Anzahl U2 der Zähne der anderen zweiten oberen oder zweiten unteren, vorteilhaft der zweiten unteren Verzahnung (37, 36) zwischen 199 und 357 oder zwischen 363 und 401 liegt, und wobei die zweite Teilung eine Zahl mit unendlich vielen Dezimalstellen ist.

10. Fräskopf nach Anspruch 9,
**dadurch gekennzeichnet, dass** die Anzahl U2 der Zähne der anderen zweiten oberen oder zweiten unteren, vorteilhaft der zweiten unteren Verzahnung (37, 36) der Anzahl U1 der Zähne der ersten unteren Verzahnung (20) entspricht.

11. Fräskopf nach einem der Ansprüche 1 bis 10,
**dadurch gekennzeichnet, dass** der Fräskopf (1) ein 45°-Fräskopf ist, insbesondere dass die Drehachse des Mittenabschnitts (5) und die Drehachse des Werkzeugabschnitts (4) in einem Winkel von 45° stehen.

12. Fräsmaschine mit einem Fräskopf (1) nach einem der Ansprüche 1 bis 11.

13. Verfahren zur Positionierung eines Fräskopfs (1) nach einem der Ansprüche 1 bis 11,
wobei eine Steuereinheit eine erste Istposition des Mittenabschnitts (5) relativ zum Werkzeugabschnitt (4) mit einer ersten Sollposition des Mittenabschnitts (5) relativ zum Werkzeugabschnitt (4) vergleicht,
wobei die Steuereinheit unter Berücksichtigung der Teilung mindestens zwei, bevorzugt sämtliche, mögliche Realpositionen berechnet, wie der Mittenabschnitt (5) relativ zum Werkzeugabschnitt (4) in eine erste Realposition ausrichtbar ist,
wobei die Steuereinheit unter den berechneten möglichen Realpositionen die erste Realposition auswählt, bei der die geringste Abweichung zwischen erster Sollposition und erster Realposition besteht,
und wobei die erste Realposition des Mittenabschnitts (5) relativ zum Werkzeugabschnitt (4) eingestellt wird.

14. Verfahren nach Anspruch 13,
**dadurch gekennzeichnet, dass** zur Einstellung der ersten Realposition des Mittenabschnitts (5) relativ zum Werkzeugabschnitt (4) der erste obere Ring (13) und der erste Zwischenring (15) verstellt werden, und insbesondere dass der erste obere Ring (13) und der erste Zwischenring (15) in entgegengesetzter Drehrichtung verstellt werden.

15. Verfahren nach Anspruch 13 oder 14,
**dadurch gekennzeichnet, dass** zur Einstellung der ersten Realposition der erste Zwischenring (15) soweit gedreht wird, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht, und dass zur Einstellung der ersten Realposition der erste obere Ring (13) soweit gedreht wird, dass bezüglich der Vorkommastellen der Abweichung zwischen erster Sollposition und erster Realposition die geringste Abweichung zwischen erster Sollposition und erster Realposition besteht.

16. Verfahren nach Anspruch 13 oder 14,
**dadurch gekennzeichnet, dass** zur Einstellung der ersten Realposition der erste obere Ring (13) soweit gedreht wird, dass bezüglich der Dezimalstellen, insbesondere der ersten Dezimalstelle, besonders bevorzugt der zweiten Dezimalstelle, der Abweichung zwischen erster Sollposition und erster Realposition die geringste Abweichung zwischen erster Sollposition und erster Realposition besteht, und dass zur Einstellung der ersten Realposition der erste Zwischenring (15) soweit gedreht wird, dass bezüglich der Vorkommastellen der Abweichung zwischen erster Sollposition und erster Realposition die geringste Abweichung zwischen erster Sollposition und erster Realposition besteht.

17. Verfahren zur Positionierung eines Fräskopfs nach einem der Ansprüche 13 bis 16 und nach Anspruch 4, oder nach einem der Ansprüche 13 bis 16 und Anspruch 9 oder 10, wobei eine Steuereinheit eine zweite Istposition des Anbindungsabschnitts (2) relativ zum Mittenabschnitt (5) mit einer zweiten Sollposition des Anbindungsabschnitts (2) relativ zum Mittenabschnitt (5) vergleicht,
wobei die Steuereinheit unter Berücksichtigung der zweiten Teilung mindestens zwei, bevorzugt sämtliche, mögliche Realpositionen berechnet, wie der Anbindungsabschnitt (2) relativ zum Mittenabschnitt (5) in eine zweite Realposition ausrichtbar ist,
wobei die Steuereinheit unter den berechneten möglichen Realpositionen die zweite Realposition auswählt, bei der die geringste Abweichung zwischen zweiter Sollposition und zweiter Realposition besteht,
und wobei die zweite Realposition des Anbindungsabschnitts (2) relativ zum Mittenabschnitt (5) eingestellt wird.
